# DEMANDE DE BREVET EUROPEEN

(11) **EP 4 391 485 A1**
(43) Date de publication de la demande: **26.06.2024**
(21) Numéro de dépôt: 23217365.8
(22) Date de dépôt: 15.12.2023
(51) Int. Cl.: H04L 51/02, H04L 51/046, H04L 51/04

(54) **PROCÉDÉ ET DISPOSITIF DE TRAITEMENT D'UN MESSAGE REÇU PAR UN CLIENT ÉLECTRONIQUE D'UN AGENT CONVERSATIONNEL**

(30) Priorité: 19.12.2022 FR 2213742
(71) Demandeur: Orange, 92130 Issy-les-Moulineaux (FR)
(72) Inventeur: LE HUEROU, Emmanuel, 92326 Chatillon (FR); TOUTAIN, François, 92326 Chatillon (FR); PONTIGGIA, Michael, 92326 Chatillon (FR)

(57) **Abrégé**

L'invention concerne un procédé de traitement d'un message reçu par un client électronique (102) d'un agent conversationnel (101), ledit procédé étant mis en oeuvre par un dispositif de traitement (200) et caractérisé en ce qu'il comprend :
- une étape d'obtention (300), en provenance dudit agent conversationnel, dudit message comprenant au moins une règle de gestion et au moins une action associée ;
- une étape d'exécution (ACT) de ladite au moins une action associée en fonction d'un résultat d'au moins une évaluation de ladite au moins une règle de gestion.

## Description

### 1. Domaine de l'invention

L'invention se rapporte au domaine des télécommunications et concerne plus particulièrement les services numériques fournis à un utilisateur par un agent conversationnel.

### 2. Art Antérieur

L'utilisation des agents conversationnels est de plus en plus répandue et révolutionne la relation client. Ces programmes informatiques analysent en temps réel les messages / questions (soit en langage naturel, soit par des choix prédéfinis) émis par un utilisateur, par exemple via un protocole de messagerie enrichie tel que le standard GSMA « Rich Communication Suite / (Rich Communication Services) » (RCS), et y apportent une réponse adaptée.

Les agents conversationnels sont de type « rule-based », c'est-à-dire qu'ils mettent en oeuvre des règles qui permettent de déterminer le cycle de vie d'une transaction (ensemble de messages échangés au cours d'une même session de communication entre un agent conversationnel et un client) en fonction d'états et d'événements (fonctionnement de type automate à états). Par exemple, une règle de transition d'un état à un autre peut prévoir une condition, qui s'évalue dans le contexte d'exécution de l'agent conversationnel. Concrètement, toute information qui remonte de l'infrastructure de service de l'agent conversationnel peut venir alimenter ce contexte et peut donc être prise en compte dans l'évaluation d'une condition.

Cependant, dans certaines situations, il peut être intéressant de prendre en compte le contexte d'exécution du client de l'agent conversationnel, c'est-à-dire du module informatique et / ou matériel (application mobile, interface web, client de messagerie, etc.) qui est en lien avec l'utilisateur.

Force est de constater qu'à l'heure actuelle il n'existe pas une telle possibilité. Il y a donc nécessité d'inventer de nouvelles modalités d'interaction entre un agent conversationnel et un client qui permettent la prise en compte d'un contexte d'exécution du client de l'agent conversationnel.

### 3. Exposé de l'invention

L'invention vient améliorer l'état de la technique et propose à cet effet un procédé de traitement d'un message reçu par un client électronique d'un agent conversationnel, ledit procédé étant mis en oeuvre par un dispositif de traitement et caractérisé en ce qu'il comprend :
- une étape d'obtention, en provenance dudit agent conversationnel, dudit message comprenant au moins une règle de gestion et au moins une action associée ;
- une étape d'exécution de ladite au moins une action associée en fonction d'un résultat d'au moins une évaluation de ladite au moins une règle de gestion.

Avantageusement, l'invention permet à un client d'un agent conversationnel d'exécuter une action en fonction du résultat de l'évaluation d'une ou plusieurs conditions / règles obtenues depuis l'agent conversationnel. Ce mode de réalisation permet, par exemple, au client de l'agent conversationnel de vérifier tout ou partie de la ou des conditions (règles de gestion) relatives au déroulement d'une transaction / d'un dialogue avec l'agent conversationnel (cycle de vie de la transaction). On entend par dialogue, l'ensemble des messages électroniques échangés lors d'une session entre un agent conversationnel et un de ses clients. A noter que la session peut comprendre un seul message émis par l'agent conversationnel.

On entend par message un ensemble de données destinées à être transmises par un système informatique. Le message peut être textuel, sous forme d'un flux de donnée ou d'un/de fichiers.

On entend par règle de gestion, l'ensemble des règles métiers associées à un client de l'agent conversationnel. Les règles de gestion peuvent par exemple comprendre des conditions (localisation, vitesse, température, altitude, etc.) et/ou des seuils à respecter (par exemple un délai prédéfini). A noter que les règles de gestion peuvent prendre la forme d'expressions régulières et / ou d'un code informatique interprétable.

On entend par agent conversationnel un automate informatique de dialogue apte à dialoguer avec un client (objet connecté, ordinateur, tableau de bord d'un véhicule, etc.). L'agent conversationnel génère des messages à destination du client et interprète les réponses émises en retour afin de répondre aux demandes / besoins renseignés par le client. A noter que le dialogue peut se faire vocalement et/ ou au travers d'une interface homme-machine (écran, clavier, etc.).

Selon un mode de mise en oeuvre particulier de l'invention, un procédé tel que décrit ci-dessus est caractérisé en ce que ladite évaluation de ladite au moins une règle de gestion est effectuée en fonction d'au moins une donnée de contexte dudit client.

Avantageusement, ce mode de mise en oeuvre permet au client de prendre en compte son contexte dans l'évaluation des règles de gestion obtenues. Par exemple, les règles de gestion peuvent comprendre des conditions liées à la localisation du client (sa proximité et/ou sa position / ses coordonnées). A noter que les données de contexte peuvent être obtenues par le client et/ou via des dispositifs électroniques tiers.

En outre, ce mode de réalisation permet de limiter les coûts inhérents à l'exécution de l'agent conversationnel, en laissant le client valider certaines conditions de la transaction liées à son contexte. En effet, une telle mise en oeuvre permet de ne pas avoir à déployer une infrastructure dédiée à la transmission de données de contexte du client à destination de l'agent conversationnel. De plus, l'agent conversationnel n'a pas à traiter les données de contexte du client ce qui permet d'optimiser l'utilisation de la mémoire et / ou du processeur de l'agent conversationnel. Enfin, les données de contexte du client sont traitées localement, préservant ainsi leur caractère personnel, sans divulgation vers un équipement distant.

On entend par donnée de contexte, l'ensemble des données collectées et/ou générées par un client d'un agent conversationnel. Par exemple les données de contexte peuvent être générées à partir des données collectées par le client.

Selon un mode de mise en oeuvre particulier de l'invention, un procédé tel que décrit ci-dessus est caractérisé en ce que ledit au moins un résultat est obtenu depuis une deuxième interface homme-machine dudit client à la suite d'une restitution de ladite au moins une règle de gestion au travers d'une première interface homme-machine dudit client.

Ce mode de mise en oeuvre permet à l'utilisateur du client, par exemple l'utilisateur d'un ordinateur de bord d'un véhicule ou un terminal mobile (smartphone en anglais), d'évaluer une ou plusieurs règles / conditions obtenues de l'agent conversationnel. Concrètement, les règles sont au préalable restituées (vocalement et/ou graphiquement) à l'utilisateur par le client via une première interface homme-machine puis évaluées par celui-ci.

Une fois les règles évaluées, le ou les résultats sont transmis au client par l'utilisateur via une seconde interface homme-machine.

A noter que la première et la deuxième interface homme-machine peuvent être une seule et même interface homme-machine.

Selon un mode de mise en oeuvre particulier de l'invention, un procédé tel que décrit ci-dessus est caractérisé en ce que ladite au moins une évaluation est conditionnée par le résultat d'une étape de validation réalisée par un utilisateur au travers d'une interface homme-machine dudit client.

Ce mode de mise en oeuvre permet à un utilisateur de valider ou non l'évaluation d'une règle / condition obtenue depuis l'agent conversationnel. Ce mode de mise en oeuvre permet également, lorsque l'évaluation de la règle de gestion nécessite l'utilisation d'une donnée sensible/personnelle (par exemple une localisation, une identité, etc.), d'obtenir un consentement de la part de l'utilisateur. Ce consentement peut lui être demandé en début de transaction et/ou en cours de transaction.

Selon une variante de ce mode de mise en oeuvre, le consentement peut alternativement ou cumulativement correspondre à un consentement de l'utilisateur à l'utilisation d'un type d'agent conversationnel (par exemple de type paiement) et/ou à un agent conversationnel particulier.

Selon un mode de mise en oeuvre particulier de l'invention, un procédé tel que décrit ci-dessus est caractérisé en ce que l'étape d'obtention comprend en outre l'obtention d'au moins une donnée de description de ladite au moins une règle de gestion.

Avantageusement, ce mode de mise en oeuvre permet d'associer une donnée de description à une règle de gestion. Concrètement, la donnée de description peut décrire la règle de gestion associée et être restituée à l'utilisateur via une interface homme-machine du client. La donnée de description peut correspondre à un texte et/ou une image et/ou un son. (par exemple une « rich card » RCS (Rich Communication Services).

Selon un mode de mise en oeuvre particulier de l'invention, un procédé tel que décrit ci-dessus est caractérisé en ce que l'étape d'exécution de ladite au moins une action est conditionnée par le résultat d'une étape de validation réalisée par un utilisateur au travers d'une interface homme-machine dudit client.

Ce mode de mise en oeuvre permet à un utilisateur de valider ou non l'exécution d'une action.

Selon un mode de mise en oeuvre particulier de l'invention, un procédé tel que décrit ci-dessus est caractérisé en ce que ledit message est de type RCS.

Le protocole RCS est un protocole de messagerie enrichie défini par le consortium GSMA. Ce protocole permet entre autres la construction d'un agent conversationnel. Le message peut être conforme à la norme GSMA FNW.11. Concrètement, un nouveau type de message peut être introduit, par exemple, à la section 2.4 (RCSMessageType), selon le format ci-dessous :
*Property : conditionalAction*
*Type : object*
*Mandatory : no*
*Description : This is the conditionalAction JSON object, containing one or several rules to be evaluated by the client software, and one or several actions to be performed following positive évaluation.*

Alternativement, le message peut être un message de type XMPP ou d'une façon générale tout message apte à permettre un dialogue entre un agent conversationnel et un client électronique de l'agent conversationnel.

L'invention concerne également un dispositif de traitement d'un message reçu par un client électronique d'un agent conversationnel caractérisé en ce qu'il comprend :
- un module d'obtention, en provenance dudit agent conversationnel, dudit message comprenant au moins une règle de gestion et au moins une action associée ;
- un module d'exécution de ladite au moins une action associée en fonction d'un résultat d'au moins une évaluation de ladite au moins une règle de gestion.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Selon un mode de mise en oeuvre particulier de l'invention, un dispositif tel que décrit ci-dessus est caractérisé en ce qu'il est compris dans un terminal et/ou dans un véhicule.

L'invention concerne également un programme d'ordinateur comportant des instructions pour la mise en oeuvre du procédé ci-dessus selon l'un quelconque des modes particuliers de réalisation décrits précédemment, lorsque ledit programme est exécuté par un processeur. Le procédé peut être mis en oeuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de traitement et ce programme d'ordinateur présentent des caractéristiques et avantages analogues à ceux décrits précédemment en relation avec le procédé de traitement.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre de l'invention selon un mode particulier de réalisation de l'invention ;
[Fig 2] La figure 2 illustre de manière schématique un exemple d'architecture d'un dispositif adapté pour la mise en oeuvre du procédé de traitement selon un mode de réalisation particulier de l'invention ;
[Fig 3] La figure 3 illustre les principales étapes du procédé de traitement selon un mode de réalisation particulier de l'invention ;

### 5. Description d'un mode de réalisation de l'invention

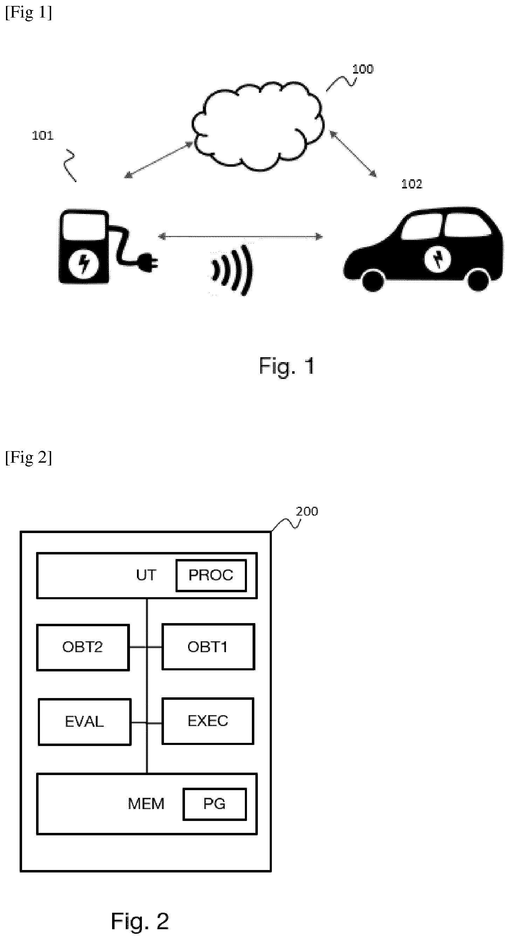

La figure 1 illustre un exemple d'environnement de mise en oeuvre de l'invention selon un mode particulier de réalisation de l'invention. La figure 1 illustre plus particulièrement un terminal 102 (par exemple un objet connecté) apte à mettre en oeuvre le procédé de traitement selon un mode particulier de réalisation. Le terminal 102 correspond dans notre exemple à un ordinateur de bord d'une voiture électrique connectée (client de l'agent conversationnel au sens de l'invention).

Selon un mode particulier de réalisation de l'invention, le procédé peut être mis en oeuvre par tout type de terminal connecté possédant l'architecture d'un ordinateur comme par exemple, et de façon non limitative, une console de jeux, une télévision, un distributeur automatique de billets, un routeur, une tablette, un ordinateur personnel, un smartphone, etc.

L'environnement de mise en oeuvre de l'invention comprend également un agent conversationnel qui dans notre exemple est hébergé /exécuté au niveau d'une borne de recharge électrique 101. L'agent conversationnel permet de gérer les actes liés à la recharge d'un véhicule électrique au niveau de la borne (planification d'une recharge, recharge à proprement parler, paiement, etc.). A noter que l'agent conversationnel peut également être hébergé /exécuté sur un serveur situé dans le réseau et connecté à la borne de recharge 101. Selon un mode particulier de réalisation de l'invention, l'agent conversationnel peut être mis en oeuvre par tout type de terminal connecté possédant l'architecture d'un ordinateur comme par exemple, et de façon non limitative, un serveur, une passerelle, une console de jeux, une télévision, un distributeur automatique de billets, un routeur, une tablette, un ordinateur personnel, un smartphone, etc.

Selon un mode particulier de réalisation de l'invention, l'agent conversationnel peut être réparti partiellement ou totalement entre la borne de recharge électrique et une plateforme (i.e un serveur) située dans le réseau (non représenté).

Les communications entre la borne de recharge électrique 101 et le tableau de bord 102 sont par exemple réalisées via le réseau 100 (par exemple IP et/ou circuit) et la technologie RCS (Rich Communication Services).

Selon un mode particulier de réalisation de l'invention, le véhicule électrique 102 peut dialoguer directement avec l'agent conversationnel de la borne de recharge 101. La communication peut être filaire, via par exemple la technologie CPL (Courant Porteur en Ligne) lors du branchement de la voiture électrique 102 à la borne 101 ou bien sans fil via par exemple les technologies Bluetooth^{®}, WiFi^{®} et/ou de radiotéléphonie cellulaire.

Selon un mode particulier de réalisation de l'invention, le client de l'agent conversationnel 102 peut être réparti partiellement ou totalement entre le tableau de bord de la voiture électrique et un smartphone (non représenté) qui lui est associé.

La figure 2 illustre un dispositif 200 configuré pour mettre en oeuvre le procédé de traitement selon un mode particulier de réalisation. Selon un mode particulier de réalisation de l'invention, le dispositif 200 a l'architecture classique d'un ordinateur, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de traitement tel que décrit précédemment, lorsque le programme est exécuté par le processeur PROC.

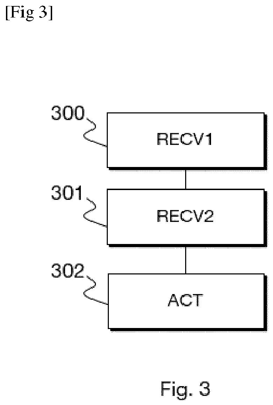

A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé de traitement selon l'un quelconque des modes particuliers de réalisation décrits en relation avec les figures 1 et 3, selon les instructions du programme d'ordinateur PG.

Le dispositif 200 comprend un module OBT1 apte à obtenir une ou plusieurs règles de gestion et une ou plusieurs actions associées en provenance d'un agent conversationnel. Selon un mode de réalisation particulier, le module OBT1 est également apte à obtenir au moins une donnée de description associée à une règle de gestion.

Selon un mode particulier de réalisation de l'invention, le dispositif 200 peut en outre comprendre un module OBT2 apte à obtenir un ou plusieurs résultats d'évaluation d'une ou de plusieurs règles obtenues via le module OBT1.

Selon un mode particulier de réalisation de l'invention, le dispositif 200 peut également comprendre un module EVAL apte à évaluer une ou plusieurs règles obtenues via le module OBT1.

Le dispositif 200 comprend en outre un module EXEC apte à exécuter au moins une action associée à une règle de gestion pour laquelle le résultat de son évaluation obtenue via le module OBT2 est positif.

Selon un mode de réalisation particulier, les modules OBT1 et OBT2 sont aptes à communiquer (émettre et/ou recevoir des messages) via un réseau IP et/ou circuit.

Selon un mode de réalisation particulier, les modules OBT1 et OBT2 sont un seul et même module.

Selon un mode de réalisation particulier, le dispositif 200 peut comprendre un module de stockage numérique (par exemple la mémoire MEM) apte à stocker les règles de gestion obtenues d'un agent conversationnel via le module OBT1.

Selon un mode de réalisation particulier, le dispositif 200 comprend un premier module d'interface homme-machine (non représenté) apte à restituer à un utilisateur une ou plusieurs règles de gestion obtenues via le module OBT1.

Selon un mode de réalisation particulier, le dispositif 200 comprend un second module d'interface homme-machine (non représenté) apte à recueillir une validation et/ou un consentement de la part d'un utilisateur. La validation peut correspondre à la validation d'une condition d'une règle de gestion et le consentement à un accord pour l'utilisation d'une donnée personnelle de l'utilisateur.

Selon un mode de réalisation particulier, le premier et le second module d'interface homme-machine sont un seul et même module.

La figure 3 illustre des étapes du procédé de traitement selon l'un des modes particuliers de réalisation de l'invention présentés précédemment, le procédé étant exécuté sur le terminal 102 (tableau de bord d'une voiture électrique) décrit à la figure 1.

Le terminal 102 (client au sens de l'invention) communique par exemple avec l'agent conversationnel compris dans la borne de rechargement 101 via le réseau 100 et la technologie RCS (Rich Communication Services).

Lors d'une première étape 300, le procédé obtient dans un message des règles de gestion et des actions associées en provenance de l'agent conversationnel de la borne de rechargement 101.

Selon un mode de réalisation particulier, le message peut être un message dit « de service » c'est-à-dire non visible de l'utilisateur du terminal 102 (non restitué à l'utilisateur par le terminal 102).

Selon un mode de réalisation particulier, le message peut en outre comprendre une donnée dite « de dialogue » apte à être restituée (graphiquement et/ ou vocalement) via une interface homme-machine du terminal 102. Cette donnée de dialogue comprend par exemple une liste des services rendus par l'agent conversationnel et plus généralement l'ensemble des informations s'y rapportant. En outre, elle peut comprendre un mode opératoire, une information liée à un service, une réponse de l'agent conversationnel à un message émis par le terminal 102, etc. La donnée de dialogue peut également correspondre à un texte et/ou une image et/ou une vidéo et/ou une « rich card » RCS (dynamique ou non, c'est-à-dire modifiée au fil du temps) et/ou des éléments graphiques sélectionnables/cliquables (URL (en anglais Uniform Resource Locator), boutons, etc.) et/ ou des « quick actions » RCS (éléments graphiques permettant l'ouverture d'une carte, le partage de localisation, un appel téléphonique, l'ajout d'une entrée dans un calendrier, etc.).

Alternativement ou cumulativement les règles de gestion et les actions associées peuvent être obtenues depuis un serveur situé dans le réseau (non représenté).

Les règles de gestion peuvent comprendre des conditions liées au contexte (localisation, niveau de batterie, données obtenues de l'utilisateur, vitesse, etc.) du véhicule intégrant le terminal 102 (alternativement associé au terminal 102).

Concrètement les règles de gestion peuvent être :
- la présence ou non du véhicule 102 dans une zone particulière (par exemple une zone d'un kilomètre de diamètre ayant en son centre la borne de recharge 101) ;
- la saisie ou non d'une donnée permettant d'attester de la proximité du véhicule avec la borne de recharge 101 (par exemple l'identifiant de la borne 101), la saisie étant réalisée par l'utilisateur du véhicule au niveau d'une interface homme-machine du tableau de bord 102 ;
- l'atteinte d'un seuil par le véhicule, par exemple un seuil de vitesse ou de niveau de charge des batteries du véhicule ;
- l'atteinte d'un délai prédéfini ;
- la sélection d'une URL/URI ;
- Etc.

En outre, les règles de gestion peuvent être indépendantes du contexte du véhicule intégrant le terminal 102 (alternativement associé au terminal 102). Par exemple une règle de gestion peut comprendre une durée à décompter (en secondes, en minutes ou en heures).

Selon un mode de réalisation particulier, une règle de gestion peut comprendre des conditions concernant les caractéristiques matérielles du terminal 102 (par exemple, les caractéristiques de l'écran (résolution, taille, etc.) du terminal 102). Ce mode de mise en oeuvre permet, par exemple, au terminal 102 d'exécuter un affichage particulier d'une donnée de dialogue (action associée) en fonction du résultat de l'évaluation d'une telle règle de gestion (définition et taille des éléments graphiques, couleur à respecter en fonction de l'écran du terminal 102, etc.).

Les actions associées peuvent être l'émission d'un message à destination de l'agent conversationnel, un paiement réalisé auprès d'une plateforme tierce (non représentée), la restitution d'un contenu (une image et/ou une vidéo et/ou un texte transmis ou non avec la règle de gestion) ou tout autre action apte à être réalisée par le tableau de bord du véhicule 102. Lorsqu'un contenu est restitué (vocalement et/ou graphiquement), le contenu peut correspondre à des éléments graphiques sélectionnables/cliquables (URL (en anglais Uniform Resource Locator), boutons, etc.) et/ ou des « quick actions » RCS (éléments graphiques permettant l'ouverture d'une carte, le partage de localisation, un appel téléphonique, l'ajout d'une entrée dans un calendrier, etc.).

Bien évidemment, les règles de gestion peuvent être cumulées, réitérées et ou séquencées dans le temps. Par exemple, un couple règle de gestion / action peut être l'émission d'un message à destination de l'agent conversationnel 101 lorsque la vitesse du véhicule 102 est égale à zéro et que l'utilisateur du véhicule saisit au niveau d'une interface homme-machine du tableau de bord 102, une donnée permettant d'attester de la proximité du véhicule avec la borne de recharge 101.

Selon un mode de réalisation particulier, la ou les règles de gestion et la ou les actions associées peuvent être ajoutées au vocabulaire RCS qui permet de définir les logiques des agents conversationnels.

A l'étape 301, le procédé obtient un ou plusieurs résultats de l'évaluation des règles de gestions obtenues lors de l'étape 300.

Selon un mode de réalisation particulier, ces résultats peuvent être obtenus depuis le système d'exploitation du véhicule (par exemple via la fonctionnalité de « géo repérage » (en anglais geofencing) du système Android).

Selon un mode de réalisation particulier, le procédé réalise lui-même les évaluations. Dans le cas où la règle de gestion correspond à la présence ou non du véhicule 102 dans une zone particulière, le procédé évalue, grâce aux coordonnées GPS de la voiture 102 si la voiture est présente dans la zone en question. Ainsi, le procédé peut, lorsque la zone correspond à une zone d'un kilomètre de diamètre ayant en son centre la borne de recharge 101, déterminer si la voiture 102 se trouve à proximité ou non de la borne de recharge 101.

Bien évidemment, ce mode de réalisation nécessite que le tableau de bord 102 interroge le système d'exploitation du véhicule (terminal sous-jacent du client), par exemple au travers d'une API (en anglais Application Programming Interface) dédiée pour chaque type d'information (source de données de géolocalisation, source de données UWB (Ultra WideBand), source de données de vitesse,...), ou à travers un composant logiciel et/ou matériel qui agrège toutes les informations potentiellement disponibles.

Selon une variante de ce mode de réalisation particulier, les informations de contexte du véhicule permettant au procédé de traitement de réaliser l'évaluation des règles de gestion sont obtenues depuis un terminal tiers comme un smartphone ou une montre connectée (non représenté).

Selon un mode de réalisation particulier, dans le cas où la règle de gestion correspond à la détection de la borne 101 par le véhicule 102 (proximité), le procédé peut obtenir via une technologie en champ proche un identifiant de la borne de recharge 101 attestant d'une telle proximité. L'identifiant est par exemple obtenu via la technologie WiFi^{®}, bluethooth^{®}, NFC ^{®} (Near Field Communication), Zigbee ^{®}, code QR (en anglais QRCode pour quick response code), IrDA (Infra-red Data Association), etc.

Selon un mode de réalisation particulier, dans le cas où la règle de gestion correspond à une durée à décompter (par exemple, une durée de 30 minutes avant que le véhicule n'arrive à destination), le procédé peut obtenir les coordonnées de la destination, les données de circulation associées au parcours et les données associées au conducteurs (style de conduite) afin de déterminer l'instant du déclenchement du décompte.

Alternativement ou cumulativement, l'utilisateur peut réaliser les évaluations des règles de gestion et renseigner les résultats au niveau d'une interface homme-machine du terminal 102. Bien évidement les règles sont préalablement restituées au niveau d'une interface homme-machine du terminal 102. Ainsi, l'utilisateur peut par exemple attester de la proximité de la voiture 102 avec la borne de recharge 101 en renseignant (vocalement et /ou textuellement) une information, comme un identifiant inscrit sur la borne de recharge 101. A noter que le résultat de l'évaluation de la règle de gestion par l'utilisateur peut être purement déclaratif.

Selon un mode de réalisation particulier, l'utilisateur a la possibilité de décliner (vocalement et /ou textuellement) l'évaluation d'une règle de gestion (l'utilisateur est par exemple occupé). Ainsi, le résultat de l'évaluation peut correspondre à une donnée prédéfinie comme « cancel » ou « abandon ».

Dans ce cas, un message d'erreur est émis par le tableau de bord 102 à destination de l'agent conversationnel de la borne 101.

Selon un mode de réalisation particulier, un délai d'obtention prédéfini (en secondes ou en minutes) est associé à l'obtention d'un résultat d'une évaluation d'une règle de gestion. Lorsque le délai est dépassé, un message d'erreur est émis à destination de l'agent conversationnel de la borne 101 par le tableau de bord 102.

Selon un mode de réalisation particulier, une validation / un consentement est demandé à l'utilisateur par le procédé lorsque l'une des règles de gestion doit être évaluée.

Selon un mode de réalisation particulier, si la règle de gestion demande un accès à une donnée sensible de contexte du véhicule (localisation, vitesse, etc.), l'utilisateur peut préalablement valider via une interface homme-machine du tableau de bord 102 le fait que cette donnée soit obtenue puis utilisée par le procédé dans l'évaluation de la règle de gestion. Cette validation peut lui être demandée lors de l'évaluation de la règle de gestion ou préalablement à l'évaluation de la règle de gestion.

A noter que la validation peut se faire vocalement, textuellement, via la sélection d'un élément graphique particulier affiché au niveau d'un l'écran du terminal 102 ou via tout autre moyen permettant à l'utilisateur de spécifier son choix (validation ou non). A noter également que le choix de l'utilisateur peut être mémorisé par le procédé au sein d'un espace mémoire numérique, par exemple, une base de données du terminal 102.

Selon une première variante de ce mode de mise en oeuvre, un élément graphique et/ou sonore est restitué à l'utilisateur par le procédé (i.e le tableau de bord 102) lorsque la donnée sensible est en cours d'acquisition. Par exemple, un pictogramme prédéfini est affiché sur l'écran du tableau de bord indiquant que la localisation du véhicule est en cours. Cela permet à l'utilisateur de voir explicitement le fait que le procédé est en train d'obtenir des données de localisation du véhicule.

Selon une deuxième variante de ce mode de mise en oeuvre, le consentement peut alternativement ou cumulativement correspondre à un consentement de l'utilisateur à l'utilisation d'un type d'agent conversationnel et/ou à un agent conversationnel particulier (par exemple l'agent 101).

Lors de l'étape 302, lorsqu'une règle de gestion est respectée, le procédé exécute la ou les actions associées à la règle de gestion. Par exemple, le procédé peut émettre un message à destination de l'agent conversationnel afin de réserver un créneau de recharge au niveau de la borne 101. L'action peut également comprendre la restitution d'une donnée (texte, image, vidéo, « rich card » RCS) à l'utilisateur via une interface homme-machine du terminal 102.

Selon un mode de réalisation particulier, dans le cas où la règle de gestion comprend un délai prédéfini d'exécution de l'action associée ou que le temps d'évaluation de la règle de gestion est important, l'exécution de l'action peut être annulée suite à la réception d'un message d'annulation en provenance de l'agent conversationnel.

Selon un mode de réalisation particulier, le procédé peut en outre obtenir lors de l'étape 300 une donnée de description associée à une règle de gestion. Cette donnée de description peut ensuite être restituée à l'utilisateur par une interface homme-machine du tableau de bord 102. Cette donnée de description permet par exemple de donner à l'utilisateur des indications et/ ou des explications en lien avec l'action et/ou la règle de gestion associée. Concrètement la donnée de description peut comprendre un texte, une image, une vidéo (par exemple une « rich card » RCS (Rich Communication Services).

Selon un mode de réalisation particulier, la donnée de description peut également comprendre une donnée cryptographique comme un certificat, une signature, une clef de chiffrement, un défi (challenge) cryptographique, etc.

Ce mode de réalisation permet d'identifier de façon certaine l'agent conversationnel ou de sécuriser la réception des messages en provenance de l'agent conversationnel. Ainsi, ce mode de mise en oeuvre permet d'éviter les attaques dites de « l'homme du milieu » entre le terminal 102 et l'agent conversationnel.

A noter que cette donnée cryptographique peut également être comprise dans le message de réservation d'un créneau de rechargement (étape 302) et/ou permettre la génération d'une nouvelle donnée cryptographique qui peut également être comprise dans le message de réservation d'un créneau de rechargement (étape 302). Ce mode de réalisation permet d'identifier de façon certaine le terminal 102 et ou de sécuriser les messages émis à destination de l'agent conversationnel par le terminal 102.

Selon un mode de réalisation particulier, la donnée de description peut comprendre un élément graphique et/ou sonore restitué à l'utilisateur par le procédé (i.e le tableau de bord 102) lorsque la règle de gestion nécessite l'utilisation d'une donnée sensible (donnée personnelle de l'utilisateur comme son identité, sa localisation, etc.). Par exemple, la donnée de description peut comprendre un pictogramme prédéfini à afficher sur l'écran du tableau de bord indiquant que l'évaluation de la règle de gestion nécessite l'usage de la localisation du véhicule. A noter que ce pictogramme peut être restitué à l'utilisateur avec la donnée de dialogue reçue lors de l'étape 300.

Selon un mode de réalisation particulier, une validation / un consentement est demandée à l'utilisateur par le procédé préalablement à l'exécution de la ou des actions associées à la règle de gestion.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention. Selon d'autres modes particuliers de réalisation de l'invention, l'invention s'applique également à un agent conversationnel apte à gérer un automate d'une station de lavage ou un automate (barrière, paiement) d'un parking privé et plus généralement à tout type d'agent conversationnel.

## Revendications

1. Procédé de traitement d'un message reçu par un client électronique (102) d'un agent conversationnel (101), ledit procédé étant mis en oeuvre par un dispositif de traitement (200) et **caractérisé en ce qu'**il comprend :
- une étape d'obtention (300), en provenance dudit agent conversationnel, dudit message comprenant au moins une règle de gestion et au moins une action associée ;
- une étape d'exécution (ACT) de ladite au moins une action associée en fonction d'un résultat d'au moins une évaluation de ladite au moins une règle de gestion.

2. Procédé selon la revendication 1 **caractérisé en ce que** ladite évaluation de ladite au moins une règle de gestion est effectuée en fonction d'au moins une donnée de contexte dudit client.

3. Procédé selon la revendication 1 **caractérisé en ce que** ledit au moins un résultat est obtenu depuis une deuxième interface homme-machine dudit client à la suite d'une restitution de ladite au moins une règle de gestion au travers d'une première interface homme-machine dudit client.

4. Procédé selon la revendication 1 **caractérisé en ce que** ladite au moins une évaluation est conditionnée par le résultat d'une étape de validation réalisée par un utilisateur au travers d'une interface homme-machine dudit client.

5. Procédé selon la revendication 1 **caractérisé en ce que** l'étape d'obtention comprend en outre l'obtention d'au moins une donnée de description de ladite au moins une règle de gestion.

6. Procédé selon la revendication 1 **caractérisé en ce que** l'étape d'exécution de ladite au moins une action est conditionnée par le résultat d'une étape de validation réalisée par un utilisateur au travers d'une interface homme-machine dudit client.

7. Procédé selon la revendication 1 **caractérisé en ce que** ledit message est un message de type RCS conforme à la norme GSMA FNW. 11.

8. Dispositif de traitement (200) d'un message reçu par un client électronique (102) d'un agent conversationnel (101) **caractérisé en ce qu'**il comprend :
- un module d'obtention (OBT1), en provenance dudit agent conversationnel, dudit message comprenant au moins une règle de gestion et au moins une action associée ;
- un module d'exécution (EXEC) de ladite au moins une action associée en fonction d'un résultat d'au moins une évaluation de ladite au moins une règle de gestion. ;

9. Terminal **caractérisé en ce qu'**il comporte un dispositif de traitement selon la revendication 8.

10. Véhicule **caractérisé en ce qu'**il comporte un dispositif de traitement selon la revendication 8.

11. Programme d'ordinateur comportant des instructions pour la mise en oeuvre du procédé selon l'une quelconque des revendications 1 à 7, lorsque le programme est exécuté par un processeur.
